(19) **Europäisches Patentamt**

**European Patent Office**

**Office européen des brevets**

(11) **EP 1 033 674 A2**

(12) **EUROPÄISCHE PATENTANMELDUNG**

(43) Veröffentlichungstag:
06.09.2000 Patentblatt 2000/36

(51) Int. Cl.[7]: **G06K 19/073**

(21) Anmeldenummer: **00103457.8**

(22) Anmeldetag: **29.02.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **01.03.1999 DE 19908788**

(71) Anmelder: **Beta Research GmbH**
**85774 Unterföhring (DE)**

(72) Erfinder: **Mester, Roland**
**81827 München (DE)**

(74) Vertreter: **Heselberger, Johannes**
**Bardehle, Pagenberg, Dost,**
**Altenburg, Geissler, Isenbruck,**
**Galileiplatz 1**
**81679 München (DE)**

(54) **Sicherungssystem für Berechtigungskarten**

(57)     Verfahren und Berechtigungskarte zur Kontrolle der Berechtigung eines Nutzers eines Systems, wobei die Berechtigungskarte einen Prozessor und eine Speichereinheit zur Speicherung von Berechtigungsdaten aufweist, und wobei die Berechtigungsdaten die Berechtigung des Nutzers repräsentieren, wobei die Adressierung der Berechtigungsdaten in Abhängigkeit von einer Karten-spezifischen oder einer Nutzer-spezifischen Information eindeutig und umkehrbar permutiert wird.

Fig. 1

**Beschreibung**

Die vorliegende Erfindung betrifft ein Verfahren und eine Vorrichtung zur Erhöhung der Sicherheit von auf Berechtigungskarten, insbesondere auf Chipkarten, gespeicherten Berechtigungsdaten, also von Daten die die Berechtigung eines Nutzers in Bezug auf ein System repräsentieren.

Der Benutzer eines geschützten Systems soll mit möglichst wenig Aufwand und größtmöglicher Sicherheit seine Berechtigung dem System mitteilen können. Eine Möglichkeit dafür ist die Verwendung von Berechtigungskarten, insbesondere Chipkarten. Diese schiebt der Benutzer in das dafür vorgesehene Kartenlesegerät und gibt dann, je nach Anwendung, gegebenenfalls noch eine Geheimzahl ein. Das Kartenlesegerät richtet eine Berechtigungsanfrage an die Chipkarte welche die Chipkarte beantwortet. Falls die erwartete und die gelieferte Antwort übereinstimmen, wird die Berechtigung des Nutzers bejaht, andernfalls wird sie verneint. Derartige Chipkarten-Berechtigungskontrollsysteme sind bereits bei Geldkarten, Telefonkarten, Versicherungskarten und Mobiltelefonkarten bekannt.

Chipkarten sind allerdings nicht völlig fälschungssicher. Wenn nämlich die auf der Chipkarte gespeicherten Daten, sei es durch Verwendung eines Elektronenstrahlmikroskops oder durch Industriespionage bzw. Bestechung von Mitarbeitern der Produzenten dieser Chipkarten, in Erfahrung gebracht werden, kann eine Chipkarten-Kopie erstellt werden, mit deren Hilfe die durch die Original-Chipkarte belegte Berechtigung vorgetäuscht werden kann. Dies ist umso einfacher als die heute üblicherweise benutzten Chipkarten in ihren wesentlichen Merkmalen, vor allem den Prozessorfunktionen, einander ähnlich sind. Die Erstellung einer Chipkarten-Kopie erfordert somit nur eine einmalige Softwareentwicklung und eine einmalige Erstellung der Programm-Maske des Chips. Es ist also mit relativ geringem Aufwand möglich die von der Original-Chipkarte vermittelte Zugangsberechtigung in Massenproduktion zu kopieren.

Die Aufgabe der Erfindung ist deshalb die Bereitstellung von einem Verfahren und einer Vorrichtung zur Erhöhung der Sicherheit von Berechtigungsdaten auf einer Berechtigungskarte.

Die Lösung dieser Aufgabe besteht in dem Verfahren und der Vorrichtung wie sie in den unabhängigen Ansprüchen beschrieben sind.

Erfindungsgemäß wird ein Verfahren zur Kontrolle der Berechtigung eines Nutzers eines Systems mit Hilfe einer Berechtigungskarte bereitgestellt, wobei die Berechtigungskarte einen Prozessor und eine Speichereinheit zur Speicherung von Berechtigungsdaten aufweist, und wobei die Berechtigungsdaten die Berechtigung des Nutzers repräsentieren, wobei die Adressierung der Berechtigungsdaten in Abhängigkeit von einer Karten-spezifischen oder einer Nutzer-spezifischen Information eindeutig und umkehrbar permutiert wird.

Im Gegensatz zu anderen Benutzerkarten, wo höchstens abhängig von der Anwendung der Karte die Berechtigungsdaten an unterschiedlichen Stellen im Speicher abgelegt werden, werden bei dem erfindungsgemäßen Verfahren die Berechtigungsdaten auf jeder Karte ganz individuell angeordnet. Die Anordnung wird unter Verwendung einer Permutationsfunktion durchgeführt. Die Permutationsfunktion ordnet innerhalb der endlichen Menge von Adressen im Speicher den Daten eindeutig und umkehrbar neue Adressen zu. Dadurch sehen Karten, die mit den gleichen Berechtigungsdaten programmiert sind, etwa einer Schlüsselinformation zur Ermöglichung des Zugangs zu einem Pay-TV-Kanal, beim Bildvergleich mit dem Elektronenstrahlmikroskop, individuell anders aus, da die Kartenspezifischen bzw. die Nutzer-spezifischen Informationen unterschiedlich sind. Die Entschlüsselung der Berechtigungsdaten, insbesondere durch einen statistischen Bildvergleich mehrerer Exemplare der Berechtigungskarte, wird durch dieses Verfahren erheblich erschwert.

Vorzugsweise werden zusätzlich die Berechtigungsdaten in Abhängigkeit von der Karten-spezifischen oder Nutzer-spezifischen Information eindeutig und umkehrbar verschlüsselt. Durch diese Verschlüsselung ist nicht nur die Anordnung der Benutzerdaten auf der Speichereinheit unterschiedlich, sondern auch der Inhalt des Speichers in jeder Benutzerkarte individuell. Dies erschwert das Auffinden von Regelmäßigkeiten der Datenspeicherung auf der Berechtigungskarte noch weiter. Als Verschlüsselung kommen alle gängigen Verfahren in Betracht.

Vorzugsweise erfolgt die Verschlüsselung der Berechtigungsdaten in einer Verschlüsselungsschaltung in der Berechtigungskarte.

Vorzugsweise erfolgt die Permutation der Adressierung der Berechtigungsdaten in einer Permutationsschaltung in der Berechtigungskarte.

Vorzugsweise wird als Karten-spezifische Information die Seriennummer der Berechtigungskarte verwendet. Die Seriennummer ist bei jeder Benutzerkarte unterschiedlich und stets intern gespeichert und steht somit dem System zur Verfügung. In Frage kommen aber auch jegliche andere Informationen, die auf jeder Benutzerkarte unterschiedlich gespeichert werden können. Erfindungsgemäß wird die Seriennummer an einer bestimmten Stelle im Speicher gespeichert. Durch die Adress-Permutation kann sie allerdings durch einen unberechtigten nicht aufgefunden werden, da er durch statistische Vergleiche von Karten der gleichen Anwendung keine Regelmäßigkeiten feststellen kann. Möglich ist aber auch die Verwendung von Nutzer-spezifischen Informationen. Darunter fällt zum Beispiel eine Geheimzahl, die gegebenenfalls vom Nutzer zur Identifizierung in das System eingegeben wird.

Die vorliegende Erfindung bezieht sich auch auf eine Berechtigungskarte zur Kontrolle der Berechtigung eines Nutzers eines Systems, wobei die Berechtigungskarte einen Prozessor und eine Speichereinheit zur Speicherung von Berechtigungsdaten aufweist, wobei die Berechtigungsdaten die Berechtigung des Nutzers repräsentieren, wobei die Berechtigungskarte eine Funktion zur Permutation der Adressierung der Berechtigungsdaten in Abhängigkeit von einer Kartenspezifischen oder einer Nutzer-spezifischen Information aufweist. Vorzugsweise erfolgt die Permutation der Adressierung der Berechtigungsdaten in einer Permutationsschaltung.

Vorzugsweise erfolgt zusätzlich eine Verschlüsselung der Berechtigungsdaten in Abhängigkeit von einer Karten-spezifischen oder einer Nutzer-spezifischen Information. Vorzugsweise erfolgt die Verschlüsselung der Berechtigungsdaten in einer Verschlüsselungsschaltung.

Vorzugsweise wird als Karten-spezifische Information die Seriennummer der Benutzerkarte verwendet.

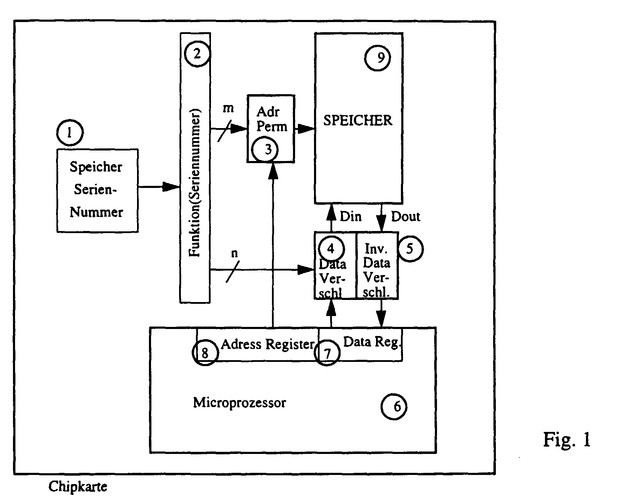

Die vorliegende Erfindung wird beispielhaft in Figur 1 dargestellt. Figur 1 zeigt eine Berechtigungskarte, hier eine Chipkarte.

Der Chipkarten-Mikroprozessor 6 schreibt zu Beginn der Programmierung der Berechtigungskarte die Berechtigungsdaten in die Speichereinheit 9. Diese Daten werden ihm extern zur Verfügung gestellt, hier nicht gezeigt. Der Prozessor 6 übermittelt die entsprechenden Adressen aus seinem Adress-Register 8 an die Permutationsschaltung 3. Diese permutiert die Adressen unter Verwendung der in der Funktionseinheit 2 umgewandelten Seriennummer in andere Adressen und gibt diese an die Speichereinheit 9 weiter. Die Funktionseinheit 2 wendet auf die in dem Speicher 1 niedergelegte Seriennummer der Chipkarte eine komplexe Funktion an und übermittelt das Ergebnis m an die Permutationsschaltung 3. Aus dem Daten-Register 7 des Prozessors 6 werden dann die Berechtigungsdaten an die Verschlüsselungsschaltung 4 weitergeleitet, wo sie unter Verwendung des Ergebnisses n der Funktionseinheit 2, das durch Anwendung einer weiteren komplexen Funktion auf die Seriennummer der Karte erhalten wird, verschlüsselt und an die Speichereinheit 9 unter Verwendung der von der Permutationsschaltung 3 hierfür bereitgestellten Adressen weitergegeben werden. Die Ergebnisse m und n können auch aus der Anwendung derselben Funktion auf die Seriennummer erhalten werden, etwa durch Verwendung eines Teils des Funktionsergebnisses als Ergebnis m und eines anderen Teils als Ergebnis n. In einer vereinfachten Ausführungsform können die Ergebnisse m und n auch identisch sein.

Wenn der Chipkarten-Mikroprozessor 6 von der Speichereinheit 9 die Benutzerdaten lesen möchte übermittelt der Prozessor 6 die entsprechenden Adressen aus seinem Adress-Register 8 an die Permutationsschaltung 3. Diese permutiert die Adressen, wie beim Scbreibvorgang, unter Verwendung der in der Funktionseinheit 2 umgewandelten Seriennummer, des Ergebnisses m, in andere Adressen und gibt diese an die Speichereinheit 9 weiter. Dort werden die entsprechenden Daten an die inverse Verschlüsselungsschaltung 5 weitergeleitet, wo sie unter Verwendung des Ergebnisses n der Funktionseinheit 2 entschlüsselt und anschließend in das Daten-Register 7 des Prozessors 6 geschrieben werden. Damit kann die Prüfung der Berechtigung des Nutzers bzw. der Karte verifiziert werden.

Bei der Permutation der Adressen, der Verschlüsselung der Daten und der Entschlüsselung der Daten können beispielsweise die folgenden Funktionen verwendet werden:

Der Permutationsschlüssel für die Permutation der Adressen in der Permutationsschaltung 3 unter Verwendung der Seriennummer kann mit Hilfe der folgenden Funktion berechnet werden.

$$ASchlüssel(Seriennummer) = (1 + (Seriennummer\ DIV2)\ *2)\ modulo\ Speichergröße$$

Unter Speichergröße versteht man in diesem Fall die Anzahl der Speicherplätze. Dann ergibt sich für die Seriennummer 1234567 und einer Speichergröße von 16 Speicherplätzen der folgende Permutationsschlüssel.

$$ASchlüssel(1234567) = (1 + 1234566)\ mod\ 16 = 7$$

Für die Adress-Permutation unter Verwendung des Permutationsschlüssels kann beispielsweise folgende Funktion verwendet werden:

$$NeueAdresse = (AlteAdresse\ *\ ASchlüssel)\ modulo\ Speichergröße$$

Daraus ergibt sich dann für diese Seriennummer folgende Zuordnung der alten Speicherplatzadressen zu den neuen Speicherplatzadressen:

| 0 | 1 | 2 | 3 | 4 | 5 | 6 | 7 | 8 | 9 | 10 | 11 | 12 | 13 | 14 | 15 |
|---|---|----|---|----|---|----|---|---|----|---|----|---|----|---|---|
| 0 | 7 | 14 | 5 | 12 | 3 | 10 | 1 | 8 | 15 | 6 | 13 | 4 | 11 | 2 | 9 |

Für die Verschlüsselung der Daten unter Verwendung der Seriennummer kann unter anderem die folgende Funktion zur Erstellung des Verschlüsselungsschlüssels verwendet werden:

$$DSchlüssel(Seriennummer) = (Seriennummer * 3) \; modulo \; (2^{Datengröße})$$

Unter Datengröße versteht man die Anzahl der Bits die an jedem Speicherplatz abgelegt werden können. Für eine Datengröße von 4 Bits und eine Seriennummer 1234567 ergibt sich dann folgender Verschlüsselungsschlüssel:

$$DSchlüssel(1234567) = (1234567 \; *3) \; mod \; (2^4) = 5$$

Für die Verschlüsselung der Daten kann dann zum Beispiel folgende Funktion verwendet werden:

$$NeueDaten = (AlteDaten + DSchlüssel) \; modulo \; (2^{Datengröße})$$

Dabei ergibt sich dann für die oben verwendeten Zahlen folgende Datenzuordnung:

| 0 | 1 | 2 | 3 | 4 | 5 | 6 | 7 | 8 | 9 | 10 | 11 | 12 | 13 | 14 | 15 |
|---|---|---|---|---|---|---|---|---|---|----|----|----|----|----|----|
| 5 | 6 | 7 | 8 | 9 | 10 | 11 | 12 | 13 | 14 | 15 | 0 | 1 | 2 | 3 | 4 |

Die Entschlüsselung der Daten wird auch auf der Grundlage des Verschlüsselungsschlüssels durchgeführt. Um die verschlüsselten Daten dann wieder zu entschlüsseln wird beispielsweise die folgende Funktion verwendet.

$$AlteDaten^* = (NeueDaten + (2^{Datengröße}) - DSchlüssel \; modulo \; (2^{Datengröße})$$

Daraus ergibt sich dann die erwartete Datenzuordnung:

| 5 | 6 | 7 | 8 | 9 | 10 | 11 | 12 | 13 | 14 | 15 | 0 | 1 | 2 | 3 | 4 |
|---|---|---|---|---|----|----|----|----|----|----|---|---|---|---|---|
| 0 | 1 | 2 | 3 | 4 | 5 | 6 | 7 | 8 | 9 | 10 | 11 | 12 | 13 | 14 | 15 |

Die vorliegende Erfindung erlaubt somit die Verwendung einer Berechtigungskarte zur Berechtigungskontrolle mit erhöhter Sicherheit gegen Fälschung. Dieser Sicherheitsgewinn wird durch einfach und kostengünstig zu implementierende Maßnahmen erreicht, so daß bei genügend komplexen Permutations- und Verschlüsselungsfunktionen eine statistische Elektronenstrahlmikroskop-Analyse keinen Erfolg mehr bringen kann.

**Patentansprüche**

1. Verfahren zur Kontrolle der Berechtigung eines Nutzers eines Systems mit Hilfe einer Berechtigungskarte, wobei

   die Berechtigungskarte einen Prozessor und eine Speichereinheit zur Speicherung von Berechtigungsdaten aufweist, und wobei die Berechtigungsdaten die Berechtigung des Nutzers repräsentieren,
   **dadurch gekennzeichnet, daß**
   die Adressierung der Berechtigungsdaten in Abhängigkeit von einer Kartenspezifischen oder einer Nutzerspezifischen Information eindeutig und umkehrbar permutiert wird.

2. Verfahren nach Anspruch 1, dadurch gekennzeichnet, daß die Berechtigungsdaten in Abhängigkeit von der Karten-spezifischen oder Nutzer-spezifischen Information eindeutig und umkehrbar verschlüsselt werden.

3. Verfahren nach Anspruch 2, dadurch gekennzeichnet, daß die Verschlüsselung der Berechtigungsdaten in einer Verschlüsselungsschaltung in der Berechtigungskarte erfolgt.

4. Verfahren nach einem der vorhergehenden Ansprüche, dadurch gekennzeichnet, daß die Permutation der Adressierung der Berechtigungsdaten in einer Permutationsschaltung in der Berechtigungskarte erfolgt.

5. Verfahren nach einem der vorhergehenden Ansprüche, dadurch gekennzeichnet, daß als Karten-spezifische Information die Seriennummer der Berechtigungskarte verwendet wird.

6.  Berechtigungskarte zur Kontrolle der Berechtigung eines Nutzers eines Systems, wobei die Berechtigungskarte einen Prozessor und eine Speichereinheit zur Speicherung von Berechtigungsdaten aufweist, wobei die Berechtigungsdaten die Berechtigung des Nutzers repräsentieren,
    **gekennzeichnet durch**
    eine Funktion zur Permutation der Adressierung der Berechtigungsdaten in Abhängigkeit von einer Karten-spezifischen oder einer Nutzer-spezifischen Information.

7.  Berechtigungskarte nach Anspruch 6, gekennzeichnet durch eine Funktion zur Verschlüsselung der Berechtigungsdaten in Abhängigkeit von einer Kartenspezifischen oder einer Nutzer-spezifischen Information.

8.  Berechtigungskarte nach einem der Ansprüche 6 oder 7, gekennzeichnet durch eine Verschlüsselungsschaltung zur Verschlüsselung der Berechtigungsdaten.

9.  Berechtigungskarte nach einem der Ansprüche 6 bis 8, gekennzeichnet durch eine Permutationsschaltung zur Permutation der Adressierung der Berechtigungsdaten.

10. Berechtigungskarte nach einem der Ansprüche 6 bis 9, gekennzeichnet durch die Seriennummer der Berechtigungskarte als Karten-spezifische Information.

Fig. 1